(19) Europäisches Patentamt
European Patent Office
Office européen des brevets

(11) **EP 3 378 682 A1**

(12) **EUROPEAN PATENT APPLICATION**
published in accordance with Art. 153(4) EPC

(43) Date of publication:
**26.09.2018 Bulletin 2018/39**

(21) Application number: **16866018.1**

(22) Date of filing: **20.09.2016**

(51) Int Cl.:
***B60G 17/015*** (2006.01)

(86) International application number:
**PCT/JP2016/077663**

(87) International publication number:
**WO 2017/086015 (26.05.2017 Gazette 2017/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.11.2015 JP 2015226990**

(71) Applicant: **KYB Corporation
Tokyo 105-6111 (JP)**

(72) Inventor: **MASAMURA, Tatsuya
Tokyo 105-6111 (JP)**

(74) Representative: **MFG Patentanwälte
Meyer-Wildhagen Meggle-Freund
Gerhard PartG mbB
Amalienstraße 62
80799 München (DE)**

(54) **SUSPENSION DEVICE**

(57)　A suspension system (S) according to the present invention is configured to control actuators ($A_{FR}$, $A_{FL}$, $A_{RR}$, $A_{RL}$) by determining a pitch damping force ($F_P$) and a roll damping force $F_R$) to cancel roll and pitch moments ($M_P$, $M_R$) of a body (B), and determining target control forces ($F_{TFR}$, $F_{TFL}$, $F_{TRR}$, $F_{TRL}$) in consideration of the pitch damping force ($F_P$) and the roll damping force $F_R$). When the pitch damping force ($F_P$) and the roll damping force ($F_R$) are output to the actuators ($A_{FR}$, $A_{FL}$, $A_{RR}$, $A_{RL}$), the actuators ($A_{FR}$, $A_{FL}$, $A_{RR}$, $A_{RL}$) can each generate a control force for cancelling a force acting on the body (B) not later but preliminarily.

*FIG. 1*

**Description**

Technical Field

The present invention relates to a suspension system.

Background Art

Such a suspension system as disclosed in JPH03070616 (A) or JPH03070617 (A) includes four fluid pressure cylinders interposed between a body of a vehicle and four front and rear, right and left wheels of the vehicle, and a controller for controlling the fluid pressure cylinders.

The controller includes four vertical acceleration sensors for detecting vertical accelerations immediately above the fluid pressure cylinders of the body, and calculates a roll rate or a pitch rate on the basis of the four vertical accelerations.

Furthermore, the controller is configured to calculate a command value for damping rolling or pitching motion on the basis of the roll rate or the pitch rate for each of the four fluid pressure cylinders to control the fluid pressure cylinders.

Specifically, the controller multiplies the roll rate by a gain to cause each fluid pressure cylinder to generate a force proportional to the roll rate or multiplies the pitch rate by a gain to cause each fluid pressure cylinder to generate a force proportional to the pitch rate, damping rolling or pitching motion.

Summary of the Invention

Thus, in a conventional suspension system, when a body of a running vehicle rolls and pitches due to vibration input from a road surface, fluid pressure cylinders are caused to generate a force damping the rolling or pitching motion to damp the rolling or pitching motion of the body.

However, since input to the body due to wheel vibration is not taken into consideration, rolling or pitching motion of the body cannot be fully damped, and the body has been required to have an improved vibration damping effect.

Therefore, the present invention has been made to solve the above problems, and an object of the present invention is to provide a suspension system which can provide an improved vibration damping effect for a body of a vehicle.

For this reason, the suspension system according to the present invention is configured to control an actuator by determining a pitch damping force and a roll damping force to cancel the roll moment and pitch moment of the body, respectively, and determining a target control force in consideration of the pitch damping force and the roll damping force.

Brief Description of Drawings

Fig. 1 is a diagram illustrating a configuration of a suspension system according to the present invention.
Fig. 2 is a diagram illustrating an exemplary configuration of an actuator.
Fig. 3 is a diagram illustrating the center of gravity, the wheelbase, and the tread of a vehicle.
Fig. 4 is a diagram illustrating a balanced state between a moment according to a pitch damping force and a roll damping force, a pitch moment, and a roll moment.
Fig. 5 is a diagram illustrating an exemplary configuration of a road input reduction control calculation unit.
Fig. 6 is a diagram illustrating another variation of the suspension system.

Description of Embodiments

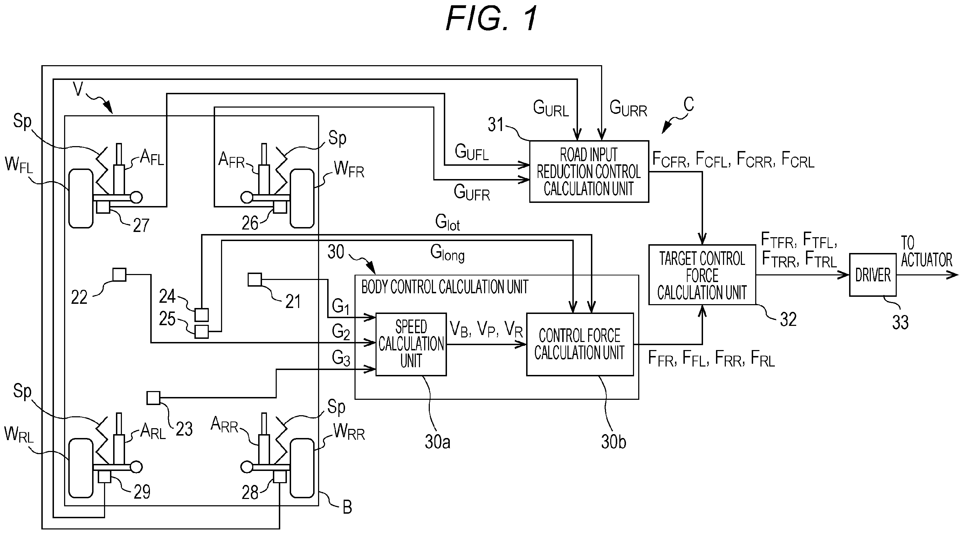

Hereinafter, the present invention will be described on the basis of embodiments with reference to the drawings. As illustrated in Fig. 1, a suspension system S includes four actuators $A_{FR}$, $A_{FL}$, $A_{RR}$, and $A_{RL}$ interposed between a body B of a vehicle V and four front and rear, right and left wheels $W_{FR}$, $W_{FL}$, $W_{RR}$, and $W_{RL}$ of the vehicle V, and a controller C for controlling the actuators $A_{FR}$, $A_{FL}$, $A_{RR}$, and $A_{RL}$.

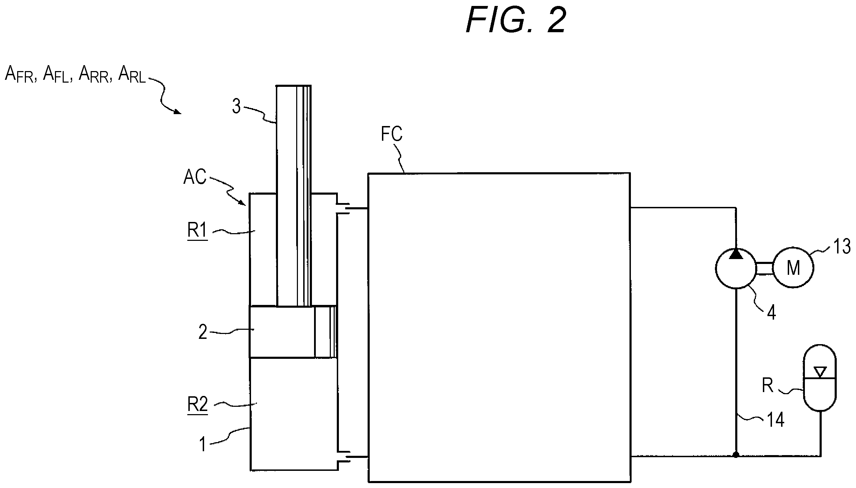

As illustrated in Fig. 2, the actuators $A_{FR}$, $A_{FL}$, $A_{RR}$, and $A_{RL}$ each includes an extensible cylinder device AC, a pump 4, and a hydraulic circuit FC provided between the cylinder device AC and the pump 4 to supply a fluid discharged from the pump 4 to the cylinder device AC to extend and contract the cylinder device AC.

In this suspension system S, the cylinder device AC includes a cylinder 1, a piston 2 movably inserted into the cylinder 1 to partition the cylinder 1 into an extension chamber R1 and an compression chamber R2, and a rod 3 movably inserted into the cylinder 1 to be connected to the piston 2. The rod 3 passes through only the extension chamber R1, and the cylinder device AC is a so-called single rod cylinder device. Note that a reservoir R is provided independent of the cylinder device AC, in Fig. 2, but, without detailed illustration, an outer cylinder may be provided to be disposed on the outer peripheral side of the cylinder 1 in the cylinder device AC to form an annular gap as the reservoir R between the cylinder 1 and the outer cylinder.

The cylinder device AC is interposed between the body B and each of the wheels $W_{FR}$, $W_{FL}$, $W_{RR}$, and $W_{RL}$ by connecting the cylinder 1 to one of the body B of the vehicle V and each of the wheels $W_{FR}$, $W_{FL}$, $W_{RR}$, and $W_{RL}$ and connecting the rod 3 to the other of the body B and each of the wheels $W_{FR}$, $W_{FL}$, $W_{RR}$, and $W_{RL}$. Note that between the body B and each of the wheels $W_{FR}$, $W_{FL}$, $W_{RR}$, and $W_{RL}$, a suspension spring Sp is interposed in parallel to the cylinder device AC.

Then, the fluid, such as hydraulic oil, is filled in the extension chamber R1 and the compression chamber R2, and the fluid is accumulated in the reservoir R. The fluid is also filled in the reservoir R and a gas spring, a spring, or both of the springs press the filled fluid. For the fluid filled in the extension chamber R1, the compression chamber R2, the reservoir R, and the reservoir R, a fluid, such as water or aqueous solution, may be employed in addition to the hydraulic oil. Furthermore, in the present invention, a chamber compressed during an extension process is defined as the extension chamber R1, and a chamber compressed during a contraction process is defined as the compression chamber R2.

The pump 4 has a suction side from which the fluid is sucked and a discharge side from which the fluid is discharged for unidirectional discharge of the fluid, and the pump is driven by a motor 13. The motor 13 may employ various types of motors, such as a brushless motor, an induction motor, or a synchronous motor, regardless of direct current or alternate current.

The suction side of the pump 4 is connected to the reservoir R through the pump passage 14, and the discharge side is connected to the hydraulic circuit FC. Accordingly, the pump 4 driven by the motor 13 sucks the fluid from the reservoir R and discharges the fluid to the hydraulic circuit FC.

Furthermore, the motor 13 for driving the pump 4 is controlled by the controller C. The controller C can adjust the amount of current to be supplied to the motor 13, and can control the rotation rate of the pump 4, in addition to driving and stopping the pump 4. That is, the pump 4 is driven and controlled by the controller C.

The hydraulic circuit FC includes an electromagnetic valve controlled by the controller C, and the fluid discharged from the pump 4 can be supplied to the extension chamber R1 and the compression chamber R2 in the cylinder device AC. Furthermore, the hydraulic circuit FC discharges the rest of the fluid discharged from any of the extension chamber R1 and the compression chamber R2 and the rest of the fluid discharged from the pump 4 to the reservoir R. In addition, in accordance with a command from the controller C, the hydraulic circuit FC adjusts the extension chamber R1 and the compression chamber R2 in pressure to control the thrust of the cylinder device AC, causing the cylinder device AC to function as active suspension. As described above, the controller C can control the thrust in each of the actuators $A_{FR}$, $A_{FL}$, $A_{RR}$, and $A_{RL}$ in accordance with a target control force obtained by the controller C itself.

As illustrated in Fig. 1, the controller C includes three acceleration sensors 21, 22, and 23, an acceleration sensor 24, an acceleration sensor 25, acceleration sensors 26, 27, 28, and 29, a body control calculation unit 30, a road input reduction control calculation unit 31, a target control force calculation unit 32, and a driver 33. The three acceleration sensors 21, 22, and 23 are installed in the body B to detect vertical accelerations $G_1$, $G_2$, and $G_3$, respectively, the acceleration sensor 24 is installed in the body B to detect a lateral acceleration $G_{lat}$ of the body B, the acceleration sensor 25 is installed in the body B to detect a longitudinal acceleration $G_{long}$ of the body B, the acceleration sensors 26, 27, 28, and 29 detect vertical accelerations $G_{UFR}$, $G_{UFL}$, $G_{URR}$, and $G_{URL}$ of the four wheels $W_{FR}$, $W_{FL}$, $W_{RR}$, and $W_{RL}$, respectively, and the driver 33 drives the motor 13, and the electromagnetic valve in the hydraulic circuit FC.

The acceleration sensors 21, 22, and 23 detect the vertical accelerations $G_1$, $G_2$, and $G_3$ in a vertical direction of the body B, and are installed at any three non-collinear points in the longitudinal direction or lateral direction of the body B. The acceleration sensors 21, 22, and 23 output the detected vertical accelerations $G_1$, $G_2$, and $G_3$ to the body control calculation unit 30. The acceleration sensor 24 and the acceleration sensor 25 input the detected lateral acceleration $G_{lat}$ and longitudinal acceleration $G_{long}$, to the body control calculation unit 30. The acceleration sensors 26, 27, 28, and 29 input the detected vertical accelerations $G_{UFR}$, $G_{UFL}$, $G_{URR}$, and $G_{URL}$ respectively to the road input reduction control calculation unit 31.

The body control calculation unit 30 includes a speed calculation unit 30a and a control force calculation unit 30b. The speed calculation unit 30a processes the accelerations $G_1$, $G_2$, and $G_3$ to determine a bounce rate $V_B$, a pitch rate Vp, and a roll rate $V_R$ of the body B, and the control force calculation unit 30b determines body control forces $F_{FR}$, $F_{FL}$, $F_{RR}$, and $F_{RL}$ to be generated by the four actuators $A_{FR}$, $A_{FL}$, $A_{RR}$, and $A_{RL}$ on the basis of the bounce rate $V_B$, the pitch rate $V_P$, the roll rate $V_R$, the lateral acceleration $G_{lat}$, and the longitudinal acceleration $G_{long}$ determined by the speed calculation unit 30a.

The speed calculation unit 30a firstly integrates the accelerations $G_1$, $G_2$, and $G_3$ to determine three vertical rates. When obtaining vertical rates at any three non-collinear points in the longitudinal direction or lateral direction of the body B, considering the body B as a rigid body, the rates of vertical, longitudinal, and lateral rotations of the body B can be obtained. Thus, on the basis of these rates, the speed calculation unit 30a determines the bounce rate $V_B$ as a vertical rate at the position of the center of gravity of the body B, the pitch rate $V_P$ as an angular rate of rotation in the front-back direction at the position of the center of gravity, and an angular rate of rotation in the lateral direction at the center of gravity and the roll rate $V_R$.

The control force calculation unit 30b receives the input of the bounce rate $V_B$, the pitch rate $V_P$, and the roll rate $V_R$ determined by the speed calculation unit 30a, and the lateral acceleration $G_{lat}$ and the longitudinal acceleration $G_{long}$ detected by the acceleration sensor 24 and the acceleration sensor 25. Then, the control force calculation unit 30b determines the body control forces $F_{FR}$, $F_{FL}$, $F_{RR}$, and $F_{RL}$, on the basis of the bounce rate $V_B$, the pitch rate $V_P$, the roll rate $V_R$, the lateral acceleration $G_{lat}$, and the longitudinal acceleration $G_{long}$.

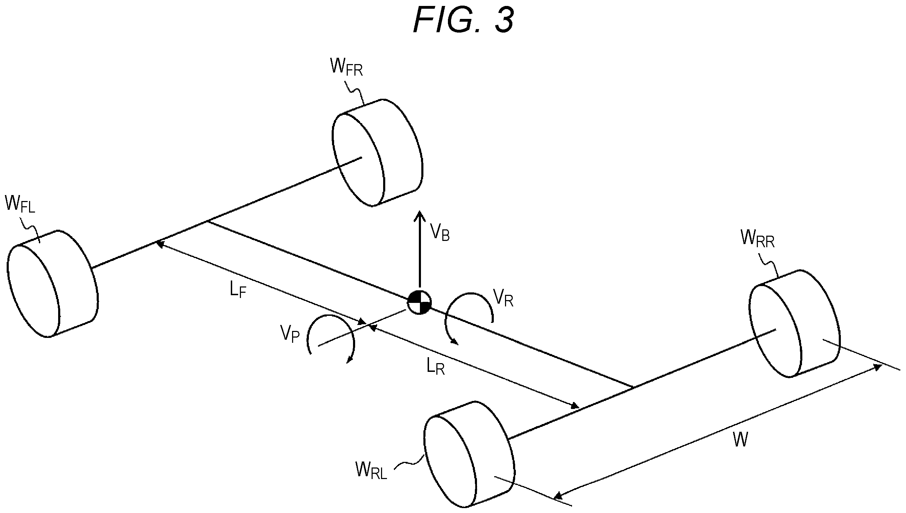

As illustrated in Fig. 3, a longitudinal distance from the center of gravity to the front wheels $W_{FR}$ and $W_{FL}$ is designated $L_F$, a longitudinal distance from the center of gravity to the rear wheels $W_{RR}$ and $W_{RL}$ is designated $L_R$, and tread between the right wheel $W_{FR}$ ($W_{RR}$) and the left wheel $W_{FL}$ ($W_{RL}$) is designated W. The control force calculation unit 30b multiplies the bounce rate $V_B$ by a gain to determine a control force for damping the vertical vibration of the body B.

Furthermore, the control force calculation unit 30b multiplies the pitch rate Vp by the gain to determine a damping moment in a pitch direction, and divides the damping moment by wheelbase ($L_F+L_R$) to determine a control force for damping the vibration of the body B due to pitching.

Furthermore, the control force calculation unit 30b multiplies the roll rate $V_R$ by the gain to determine a damping moment in a roll direction, and divides the damping moment by tread W to determine a control force for damping the vibration of the body B due to rolling.

Furthermore, the control force calculation unit 30b multiplies the input longitudinal acceleration $G_{long}$ by the gain to determine a control force required to prevent pitching of the body B due to inertial force acting in the longitudinal direction.

Then, the control force calculation unit 30b multiplies the input lateral acceleration $G_{lat}$ by the gain to determine a control force required to prevent rolling of the body B due to centrifugal force.

As described above, the control force calculation unit 30b determines the control forces, on the basis of the bounce rate $V_B$, the pitch rate $V_P$, the roll rate $V_R$, the longitudinal acceleration $G_{long}$, and the lateral acceleration $G_{lat}$. Note that the control forces are determined, designating a sign of a downward force positive, and a sign of an upward force negative. Then, the control force calculation unit 30b determines the body control forces $F_{FR}$, $F_{FL}$, $F_{RR}$, and $F_{RL}$ which are to be generated from the respective actuators $A_{FR}$, $A_{FL}$, $A_{RR}$, and $A_{RL}$, on the basis of these five control forces.

To damp the bounce of the body B, the actuators $A_{FR}$, $A_{FL}$, $A_{RR}$, and $A_{RL}$ need to generate control forces directed in the same direction and having the same magnitude. To damp pitching of the body B, the front actuators $A_{FR}$ and $A_{FL}$ and the rear actuators $A_{RR}$ and $A_{RL}$ need to generate control forces having the same magnitude and directed in the opposite directions. To damp rolling of the body B, the right actuators $A_{FR}$ and $A_{RR}$ and the left actuators $A_{FL}$ and $A_{RL}$ need to generate control forces having the same magnitude and directed in the opposite directions.

Thus, the control force calculation unit 30b adds a control force determined on the basis of the bounce rate $V_B$, a control force determined on the basis of the pitch rate $V_P$ and the lateral acceleration $G_{lat}$, and a control force determined on the basis of the roll rate $V_R$ and the lateral acceleration $G_{long}$ to damp the bouncing, pitching, and rolling of the body B, and determines the body control forces $F_{FR}$, $F_{FL}$, $F_{RR}$, and $F_{RL}$ which are to be generated from the respective actuators $A_{FR}$, $A_{FL}$, $A_{RR}$, and $A_{RL}$. The determined body control forces $F_{FR}$, $F_{FL}$, $F_{RR}$, and $F_{RL}$ are input to the target control force calculation unit 32.

The road input reduction control calculation unit 31 determines road input reduction control forces $F_{CFR}$, $F_{CFL}$, $F_{CRR}$, and $F_{CRL}$ on the basis of the vertical accelerations $G_{UFR}$, $G_{UFL}$, $G_{URR}$, and $G_{URL}$. When the wheels $W_{FR}$, $W_{FL}$, $W_{RR}$, and $W_{RL}$ vibrate, the suspension springs Sp expand and contract, generating a vibrating force causing the body B to roll and pitch. The road input reduction control forces $F_{CFR}$, $F_{CFL}$, $F_{CRR}$, and $F_{CRL}$ are each a force for cancelling the vibrating force caused by the expansion and contraction of the suspension spring Sp to vibrate the body B.

When the pitch angle is $\alpha$, the roll angle is $\beta$, a spring constant of a suspension spring Sp of a front wheel is $K_F$, a spring constant of a suspension spring of a rear wheel is $K_R$, and displacements in a vertical direction (vertical displacements) of the wheels $W_{FR}$, $W_{FL}$, $W_{RR}$, and $W_{RL}$ are $X_{UFR}$, $X_{UFL}$, $X_{URR}$, and $X_{URL}$, pitch moment $M_{SP}$ and roll moment $M_{SR}$ caused by forces generated by the suspension springs Sp are expressed by the following (formula 1) and (formula 2).

[Mathematical Formula 1]

$$M_{SP} = -2(K_F \cdot L_F{}^2 + K_R \cdot L_R{}^2)\alpha + L_F \cdot K_F \cdot (X_{UFR} + X_{UFL}) -$$

$$L_R \cdot K_R \cdot (X_{URR} + X_{URL}) \ \ldots \ (\text{formula 1})$$

[Mathematical Formula 2]

$$M_{SR} = -(W/2)(K_F + K_R)\beta + W \cdot K_F \cdot (X_{UFR} - X_{UFL})/2 +$$

$$W \cdot K_R \cdot (X_{URR} - X_{URL})/2 \ldots \text{(formula 2)}$$

In each of (formula 1) and (formula 2), the first term on the right side is a restoring force against the rolling or pitching of the body B, and the second term and the third term are considered as moment inputs vibrating the body B upon displacement of the wheels $W_{FR}$, $W_{FL}$, $W_{RR}$, and $W_{RL}$.

When forces obtained by multiplying the vertical displacements $X_{UFR}$, $X_{UFL}$, $X_{URR}$, and $X_{URL}$ of the wheels $W_{FR}$, $W_{FL}$, $W_{RR}$, and $W_{RL}$ by the spring constants $K_F$ and $K_R$ are $F_{UFR}$, $F_{UFL}$, $F_{URR}$, and $F_{URL}$, a pitch moment $M_P$ and a roll moment $M_R$ generated by the forces are expressed by the following (formula 3) and (formula 4).
[Mathematical Formula 3]

$$M_P = L_F \cdot (F_{UFR} + F_{UFL}) - L_R \cdot (F_{URR} + F_{URL}) \ldots \text{(formula 3)}$$

[Mathematical Formula 4]

$$M_R = W \cdot (F_{UFR} - F_{UFL} + F_{URR} - F_{URL})/2 \ldots \text{(formula 4)}$$

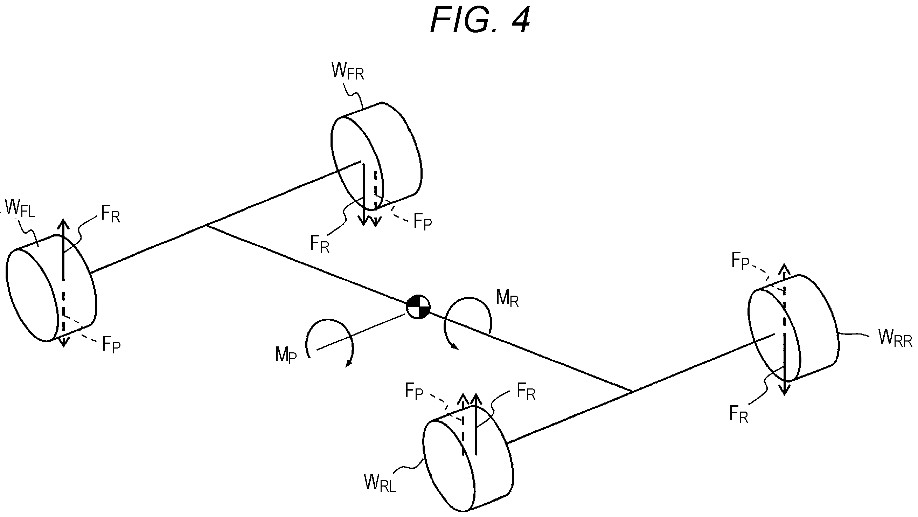

While, as illustrated in Fig. 4, consider moments $M_{PC}$ and $M_{RC}$ cancelling the moments $M_P$ and $M_R$ by applying pitch damping forces $F_P$ having the same magnitude and acting in the opposite directions by the front actuators $A_{FR}$ and $A_{FL}$ and the rear actuators $A_{RR}$ and $A_{RL}$ of the vehicle V, and applying roll damping forces $F_R$ having the same magnitude and acting in the opposite directions by the right actuators $A_{FR}$ and $A_{RR}$ and the left actuators $A_{FL}$ and $A_{RL}$ of the vehicle V. Then, the moments $M_{PC}$ and $M_{RC}$ are expressed by the following (formula 5) and (formula 6).
[Mathematical Formula 5]

$$M_{PC} = 2F_P \cdot (L_F + L_R) \ldots \text{(formula 5)}$$

[Mathematical Formula 6]

$$M_{RC} = 2W \cdot F_R \ldots \text{(formula 6)}$$

To cancel the moments $M_P$ and $M_R$ by the moments $M_{PC}$ and $M_{RC}$, conditions of $M_P = M_{PC}$ and $M_R = M_{RC}$ are desirably satisfied. When (formula 5) and (formula 6) are solved for a pitch damping force $F_P$ and a roll damping force $F_R$ while satisfying these conditions, the following (formula 7) and (formula 8) can be derived.
[Mathematical Formula 7]

$$F_P = \{L_F \cdot (F_{UFR} + F_{UFL}) - L_R \cdot (F_{URR} + F_{URL})\}/\{2(L_F +$$

$$L_R)\} \ldots \text{(formula 7)}$$

[Mathematical Formula 8]

$$F_R = (F_{UFR} - F_{UFL} + F_{URR} - F_{URL})/4 \ldots \text{(formula 8)}$$

To determine the road input reduction control forces $F_{CFR}$, $F_{CFL}$, $F_{CRR}$, and $F_{CRL}$ to be generated by the actuators $A_{FR}$, $A_{FL}$, $A_{RR}$, and $A_{RL}$ on the basis of the pitch damping force $F_P$ and the roll damping force $F_R$ determined by (formula 7) and (formula 8) to damp pitching and rolling, designating the sign of a downward force positive, the following (formula 9), (formula 10), (formula 11), and (formula 12) are desirably calculated.
[Mathematical Formula 9]

$$F_{CFR} = F_P + F_R \quad ... \quad (formula\ 9)$$

[Mathematical Formula 10]

$$F_{CFL} = F_P - F_R \quad ... \quad (formula\ 10)$$

[Mathematical Formula 11]

$$F_{CRR} = - F_P + F_R \quad ... \quad (formula\ 11)$$

[Mathematical Formula 12]

$$F_{CRL} = - F_P - F_R \quad ... \quad (formula\ 12)$$

The spring constants $K_F$ and $K_R$ of the suspension springs Sp, the distances $L_F$ and $L_R$ from the center of gravity, and the tread W are already given. Furthermore, the vertical displacements $X_{UFR}$, $X_{UFL}$, $X_{URR}$, and $X_{URL}$ of the wheels $W_{FR}$, $W_{FL}$, $W_{RR}$, and $W_{RL}$ can be determined only by integrating twice the vertical accelerations $G_{UFR}$, $G_{UFL}$, $G_{URR}$, and $G_{URL}$ input from the acceleration sensors 26, 27, 28, and 29.

Thus, the road input reduction control calculation unit 31 can determine the road input reduction control forces $F_{CFR}$, $F_{CFL}$, $F_{CRR}$, and $F_{CRL}$, on the basis of the spring constants $K_F$ and $K_R$ of the suspension springs Sp, the distances $L_F$ and $L_R$, the tread W, and the vertical accelerations $G_{UFR}$, $G_{UFL}$, $G_{URR}$, and $G_{URL}$.

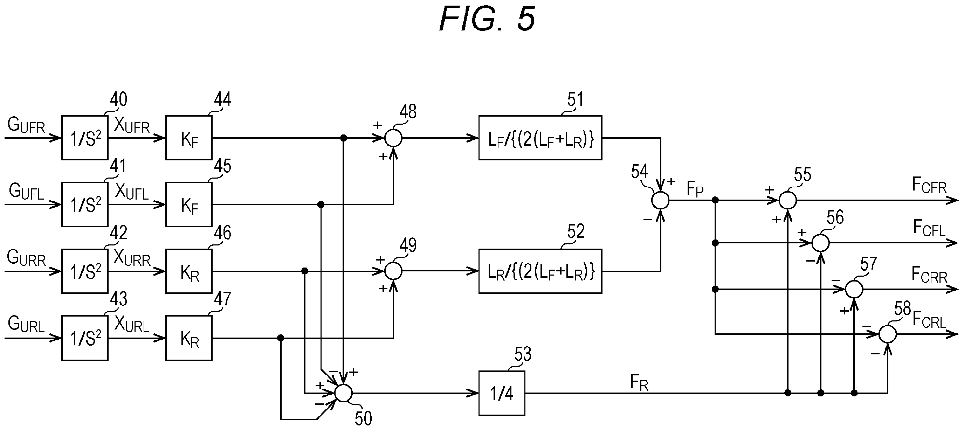

As illustrated in Fig. 5, the road input reduction control calculation unit 31 includes integrators 40, 41, 42, and 43, multipliers 44 and 45, multipliers 46 and 47, an adder 48, an adder 49, an adder 50, a multiplier 51, a multiplier 52, a multiplier 53, an adder 54, an adder 55, an adder 56, an adder 57, and an adder 58. The integrators 40, 41, 42, and 43 integrate twice the vertical accelerations $G_{UFR}$, $G_{UFL}$, $G_{URR}$, and $G_{URL}$ input from the acceleration sensors 26, 27, 28, and 29. The multipliers 44 and 45 multiply the vertical displacements $X_{UFR}$ and $X_{UFL}$ of the front wheels, which are determined by the integrators 40 and 41, by the spring constant $K_F$ to determine the forces $F_{UFR}$ and $F_{UFL}$. The multipliers 46 and 47 multiply the vertical displacements $X_{URR}$ and $X_{URL}$ of the rear wheels, which are determined by the integrators 42 and 43, by the spring constant $K_R$ to determine the forces $F_{URR}$ and $F_{URL}$. The adder 48 adds the forces $F_{UFR}$ and $F_{UFL}$. The adder 49 adds the forces $F_{URR}$ and $F_{URL}$. The adder 50 adds a value obtained by subtracting the force $F_{URL}$ from the force $FU_{RR}$ to a value obtained by subtracting the force $F_{UFL}$ from the force $F_{UFR}$. The multiplier 51 multiplies a value output from the adder 48 by $L_F/\{(2(L_F + L_R)\}$. The multiplier 52 multiplies a value output from the adder 49 by $L_R/\{(2(L_F + L_R)\}$. The multiplier 53 multiplies a value output from the adder 50 by 1/4 to determine the roll damping force $F_R$. The adder 54 subtracts a value output from the multiplier 52 from a value output from the multiplier 51 to determine the pitch damping force $F_P$. The adder 55 adds the roll damping force $F_R$ to the pitch damping force $F_P$ to obtain the road input reduction control force $F_{CFR}$. The adder 56 subtracts the roll damping force $F_R$ from the pitch damping force $F_P$ to determine the road input reduction control force $F_{CFL}$. The adder 57 changes the sign of the pitch damping force $F_P$ and adds the roll damping force $F_R$ to the pitch damping force $F_P$ to determine the road input reduction control force $F_{CRR}$. The adder 58 changes the signs of the pitch damping force $F_P$ and the roll damping force $F_R$ and adds the pitch damping force $F_P$ and the roll damping force $F_R$ to each other to determine the road input reduction control force $F_{CFL}$.

After the vertical accelerations $G_{UFR}$, $G_{UFL}$, $G_{URR}$, and $G_{URL}$ input to respective units of the road input reduction control calculation unit 31 are processed, calculation from (formula 7) to (formula 12) is performed in the road input reduction control calculation unit 31, and the road input reduction control forces $F_{CFR}$, $F_{CFL}$, $F_{CRR}$, and $F_{CRL}$ are determined.

The road input reduction control forces $F_{CFR}$, $F_{CFL}$, $F_{CRR}$, and $F_{CRL}$ obtained as described above are input to the target control force calculation unit 32. As described above, in addition to the road input reduction control forces $F_{CFR}$, $F_{CFL}$, $F_{CRR}$, and $F_{CRL}$, the body control forces $F_{FR}$, $F_{FL}$, $F_{RR}$, and $F_{RL}$ are input to the target control force calculation unit 32.

The target control force calculation unit 32 adds the road input reduction control forces $F_{CFR}$, $F_{CFL}$, $F_{CRR}$, and $F_{CRL}$ to the body control forces $F_{FR}$, $F_{FL}$, $F_{RR}$, and $F_{RL}$, respectively, to determine target control forces $F_{TFR}$, $F_{TFL}$, $F_{TRR}$, and $F_{TRL}$ for the actuators $A_{FR}$, $A_{FL}$, $A_{RR}$, and $A_{RL}$. After determining the target control forces $F_{TFR}$, $F_{TFL}$, $F_{TRR}$, and $F_{TRL}$, the target control force calculation unit 32 outputs the target control forces $F_{TFR}$, $F_{TFL}$, $F_{TRR}$, and $F_{TRL}$ to the drivers 33.

The drivers 33 are provided for the respective actuators $A_{FR}$, $A_{FL}$, $A_{RR}$, and $A_{RL}$, and each includes a drive circuit for driving the electromagnetic valve in the hydraulic circuit FC by PWM, and a drive circuit for driving the motor 13 for driving the pump 4 by PWM. When receiving input of commands for the target control forces $F_{TFR}$, $F_{TFL}$, $F_{TRR}$, and $F_{TRL}$ from the target control force calculation unit 32, each driver 33 supplies current to the electromagnetic valve and the motor 13 in accordance with each command. Note that each drive circuit in the driver 33 may be a drive circuit other than the drive circuit performing the PWM drive.

When the target control forces $F_{TFR}$, $F_{TFL}$, $F_{TRR}$, and $F_{TRL}$ are a thrust force applied to each cylinder device AC in an extension direction, the controller C controls the electromagnetic valve of the hydraulic circuit FC, to supply the fluid discharged from the pump 4 to the compression chamber R2, and controls the pressure in the compression chamber R2 in accordance with the magnitude of each of the target control forces $F_{TFR}$, $F_{TFL}$, $F_{TRR}$, and $F_{TRL}$. In contrast, when the target control forces $F_{TFR}$, $F_{TFL}$, $F_{TRR}$, and $F_{TRL}$ are a thrust force applied to each cylinder device AC in a contraction direction, the controller C controls the electromagnetic valve of the hydraulic circuit FC to supply the fluid discharged from the pump 4 to the extension chamber R1, and controls the pressure in the extension chamber R1 in accordance with the magnitude of each of the target control forces $F_{TFR}$, $F_{TFL}$, $F_{TRR}$, and $F_{TRL}$.

Note that, in the present example, the actuators $A_{FR}$, $A_{FL}$, $A_{RR}$, and $A_{RL}$ are each a hydraulic actuator including the cylinder device AC and the hydraulic circuit FC, but the actuators $A_{FR}$, $A_{FL}$, $A_{RR}$, and $A_{RL}$ may be each an electric actuator using a motor. Furthermore, the actuators $A_{FR}$, $A_{FL}$, $A_{RR}$, and $A_{RL}$ may be each a pneumatic actuator pneumatically driven.

As described above, the suspension system S is configured to determine the pitch damping force $F_P$ and the roll damping force $F_R$ for cancelling the roll and pitch moments $M_P$ and $M_R$ of the body B, respectively, determine the target control forces $F_{TFR}$, $F_{TFL}$, $F_{TRR}$, and $F_{TRL}$ in consideration of the pitch damping force $F_P$ and the roll damping force $F_R$, and control the actuators $A_{FR}$, $A_{FL}$, $A_{RR}$, and $A_{RL}$. When the pitch damping force $F_P$ and the roll damping force $F_R$ are output to the actuators $A_{FR}$, $A_{FL}$, $A_{RR}$, and $A_{RL}$, the actuators $A_{FR}$, $A_{FL}$, $A_{RR}$, and $A_{RL}$ each generate a control force for cancelling a force acting on the body B not later but preliminarily. Thus, the suspension system S according to the present invention can generate a control force for preliminarily damping the vibration of the body B to efficiently damp the vibration of the body B, as compared with a conventional suspension system detecting the vibration of the body B and then generating only a control force for damping the vibration. As described above, in the suspension system S according to the present invention, the vibration of the body B caused by the vibration of the wheels $W_{FR}$, $W_{FL}$, $W_{RR}$, and $W_{RL}$ can be cancelled, and the body B can have an improved vibration damping effect.

Furthermore, the suspension system S according to the present example is configured to add the road input reduction control forces $F_{CFR}$, $F_{CFL}$, $F_{CRR}$, and $F_{CRL}$ determined on the basis of the pitch damping force Fp and the roll damping force $F_R$ to the body control forces $F_{FR}$, $F_{FL}$, $F_{RR}$, and $F_{RL}$ for damping detected vibration of the body B, and determine the target control forces $F_{TFR}$, $F_{TFL}$, $F_{TRR}$, and $F_{TRL}$. Accordingly, according to the suspension system S of the present example, the control force for preliminarily damping the vibration of the body B can be generated, in addition to the control force for damping the detected vibration of the body B. Thus, in the suspension system S according to the present example, the body B has a considerably improved vibration damping effect, as compared with the conventional suspension system.

Furthermore, the controller C is configured to determine the roll moment $M_{PC}$ and the pitch moment $M_{RC}$ which act on the body B, on the basis of the vertical displacements $X_{UFR}$, $X_{UFL}$, $X_{URR}$, and $X_{URL}$ of the four wheels $W_{FR}$, $W_{FL}$, $W_{RR}$, and $W_{RL}$, and determine the pitch damping force $F_P$ and the roll damping force $F_R$ on the basis of the roll moment $M_{PC}$ and the pitch moment $M_{RC}$. When the roll moment $M_{PC}$ and the pitch moment $M_{RC}$ which act on the body B are determined on the basis of the vertical displacements $X_{UFR}$, $X_{UFL}$, $X_{URR}$, and $X_{URL}$, the roll moment $M_{PC}$ and the pitch moment $M_{RC}$ which act on the body B can be readily and accurately determined on the basis of the vibrations of the four wheels $W_{FR}$, $W_{FL}$, $W_{RR}$, and $W_{RL}$. Then, when the pitch damping force $F_P$ and the roll damping force $F_R$ are determined on the basis of thus obtained roll moment $M_{PC}$ and pitch moment $M_{RC}$, a control force can be appropriately generated at appropriate time on the basis of the pitch damping force $F_P$ and the roll damping force $F_R$, with a reduced calculation load.

Furthermore, the controller C controls the pitch damping forces $F_P$ caused to be generated by the actuators $A_{FR}$ and $A_{FL}$ disposed on the front side and the pitch damping forces $F_P$ caused to be generated by the actuators $A_{RR}$ and $A_{RL}$ disposed on the rear side to have the same magnitude and to be directed in the opposite directions, and controls the roll damping forces $F_R$ caused to be generated by the actuators $A_{FR}$ and $A_{RR}$ disposed on the right side and the roll damping forces $F_R$ caused to be generated by the actuators $A_{FL}$ and $A_{RL}$ on the left side to have the same magnitude and to be directed in the opposite directions. Since such a configuration as described above damps the pitching and rolling of the body B without the influence of the vertical vibration on the body B, pitching vibration and rolling vibration of the body B can be reduced considerably.

Note that the vertical displacements $X_{UFR}$, $X_{UFL}$, $X_{URR}$, and $X_{URL}$ of the wheels $W_{FR}$, $W_{FL}$, $W_{RR}$, and $W_{RL}$ can be also determined on the basis of the vertical accelerations $G_1$, $G_2$, and $G_3$ detected by the acceleration sensors 21, 22, and 23 provided in the body B and relative displacements between the body B and the wheels $W_{FR}$, $W_{FL}$, $W_{RR}$, and

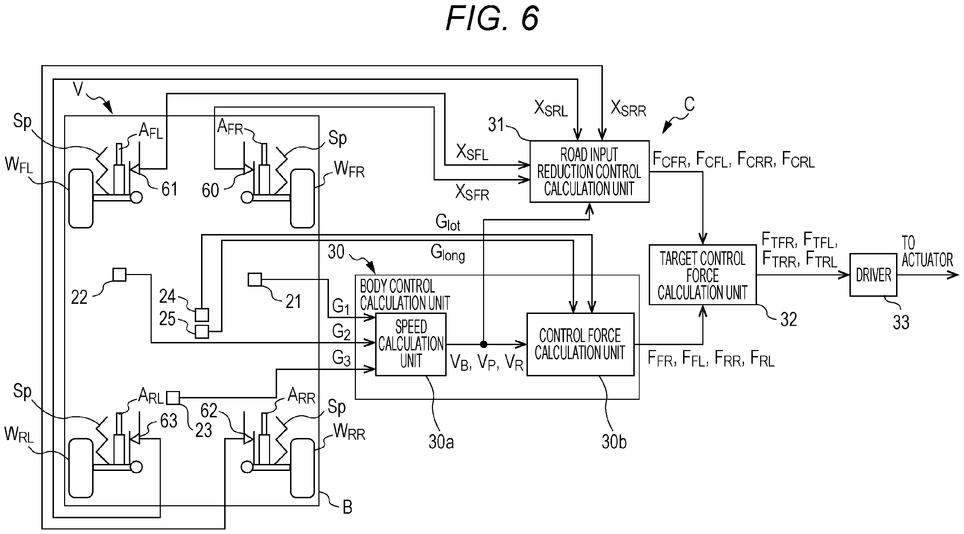

$W_{RL}$. In this case, as illustrated in Fig. 6, the relative displacements between the body B and the wheels $W_{FR}$, $W_{FL}$, $W_{RR}$, and $W_{RL}$ can be obtained with stroke sensors 60, 61, 62, and 63 provided between the body B and the wheels $W_{FR}$, $W_{FL}$, $W_{RR}$, and $W_{RL}$. Note that the stroke sensors 60, 61, 62, and 63 may be incorporated into the cylinder devices AC. When the stroke sensors 60, 61, 62, and 63 are provided, the vertical accelerations $G_{UFR}$, $G_{UFL}$, $G_{URR}$, and $G_{URL}$ of the wheels $W_{FR}$, $W_{FL}$, $W_{RR}$, and $W_{RL}$ do not need to be detected, and the acceleration sensors 26, 27, 28, and 29 can be eliminated.

The stroke sensors 60, 61, 62, and 63 detect the relative displacements between the body B and the wheels $W_{FR}$, $W_{FL}$, $W_{RR}$, and $W_{RL}$. Thus, when the displacements of the body B immediately above the wheels $W_{FR}$, $W_{FL}$, $W_{RR}$, and $W_{RL}$ are given, the vertical displacements $X_{UFR}$, $X_{UFL}$, $X_{URR}$, and $X_{URL}$ of the wheels can be determined on the basis of the displacements of the body B and the relative displacements.

As described above, on the basis of the vertical accelerations $G_1$, $G_2$, and $G_3$ detected by the acceleration sensors 21, 22, and 23, the bounce rate $V_B$, pitch rate $V_P$, and roll rate $V_R$ of the body B can be determined. Integration of the bounce rate $V_B$, the pitch rate $V_P$, and the roll rate $V_R$ can provide vertical displacement $X_{SG}$, the pitch angle $\alpha$, and the roll angle $\beta$ at the center of gravity of the body B. Since the distances $L_F$ and $L_R$ and the tread W are already given, displacements $X_{SFR}$, $X_{SFL}$, $X_{SRR}$, and $X_{SRL}$ of the body B immediately above the respective wheels can be determined by calculating the following (formula 13) to (formula 16).

[Mathematical Formula 13]

$$X_{SFR} = X_{SG} + L_F \cdot \alpha + (W/2) \cdot \beta \quad \ldots \quad (formula\ 13)$$

[Mathematical Formula 14]

$$X_{SFL} = X_{SG} + L_F \cdot \alpha - (W/2) \cdot \beta \quad \ldots \quad (formula\ 14)$$

[Mathematical Formula 15]

$$X_{SRR} = X_{SG} - L_F \cdot \alpha + (W/2) \cdot \beta \quad \ldots \quad (formula\ 15)$$

[Mathematical Formula 16]

$$X_{SRL} = X_{SG} - L_F \cdot \alpha - (W/2) \cdot \beta \quad \ldots \quad (formula\ 16)$$

When relative displacements detected by the stroke sensors 60, 61, 62, and 63 are designated $S_{FR}$, $S_{FL}$, $S_{RR}$, and $S_{RL}$, respectively and the following (formula 17) to (formula 20) are calculated using calculation results of (formula 13) to (formula 16), the vertical displacements $X_{UFR}$, $X_{UFL}$, $X_{URR}$, and $X_{URL}$ can be determined.

[Mathematical Formula 17]

$$X_{UFR} = X_{SFR} - S_{FR} \quad \ldots \quad (formula\ 17)$$

[Mathematical Formula 18]

$$X_{UFL} = X_{SFL} - S_{FL} \quad \ldots \quad (formula\ 18)$$

[Mathematical Formula 19]

$$X_{URR} = X_{SRR} - S_{RR} \quad \ldots \quad (formula\ 19)$$

[Mathematical Formula 20]

$$X_{URL} = X_{SRL} - S_{RL} \quad ... \quad \text{(formula 20)}$$

As described above, the vertical displacements $X_{UFR}$, $X_{UFL}$, $X_{URR}$, and $X_{URL}$ may be determined on the basis of the vertical accelerations $G_1$, $G_2$, and $G_3$ detected by the acceleration sensors 21, 22, and 23 provided in the body B, and the relative displacements $S_{FR}$, $S_{FL}$, $S_{RR}$, and $S_{RL}$ detected by the stroke sensors 60, 61, 62, and 63. The vertical displacements $X_{UFR}$, $X_{UFL}$, $X_{URR}$, and $X_{URL}$ may be determined on the basis of the vertical accelerations G, $G_{UFL}$, $G_{URR}$, and $G_{URL}$, or the vertical accelerations $G_1$, $G_2$, and $G_3$ of the body B and the relative displacements $S_{FR}$, $S_{FL}$, $S_{RR}$, and $S_{RL}$. Sensors suitable for the body B can be set to determine the vertical displacements $X_{UFR}$, $X_{UFL}$, $X_{URR}$, and $X_{URL}$, and the suspension system S can be easily incorporated in the vehicle V.

The preferred embodiments of the present invention has been described in detail above, but modifications, alterations, and changes may be made without departing from the spirit and scope of the present invention.

This application claims the benefit of Japanese Priority Patent Application JP 2015-226990 filed on November 19, 2015, the entire contents of which are incorporated herein by reference.

**Claims**

1. A suspension system comprising:

   four actuators interposed between a body of a vehicle and four front and rear, right and left wheels of the vehicle; and
   a controller for controlling the actuators, wherein
   the controller controls the actuators by
   determining a pitch damping force and a roll damping force to cancel roll and pitch moments of the body, respectively, on the basis of vertical displacements of the four front and back, right and left wheels in the vehicle, and
   determining a target control force for each of the actuators on the basis of the pitch damping force and the roll damping force.

2. The suspension system according to claim 1, wherein
   the controller
   determines a pitch moment and a roll moment which act on the body, on the basis of the vertical displacements of the four wheels, and
   determines the pitch damping force and the roll damping force on the basis of the pitch moment and the roll moment.

3. The suspension system according to claim 1, wherein
   the controller controls
   the pitch damping forces caused to be generated by the actuators disposed on the front side in the vehicle and the pitch damping forces caused to be generated by the actuators disposed on the rear side in the vehicle to have the same magnitude and to be directed in the opposite directions, and
   the roll damping forces caused to be generated by the actuators disposed on the right side in the vehicle and the roll damping forces caused to be generated by the actuators disposed on the left side in the vehicle to have the same magnitude and to be directed in the opposite directions.

4. The suspension system according to claim 1, wherein
   the controller
   determines vertical displacements of the wheels, on the basis of vertical accelerations of the wheels detected by acceleration sensors provided at the wheels, or
   determines vertical displacements of the wheels, on the basis of vertical accelerations of the body detected by acceleration sensors provided in the body, and relative displacements between the body and the wheels detected by stroke sensors provided between the wheels and the body.

5. The suspension system according to claim 1, wherein
   the controller
   detects vibration of the body to determine body control forces on the basis of the vibration,
   determines road input reduction control forces on the basis of the roll damping force and the pitch damping force, and

determines the target control forces by adding the body control forces to the road input reduction control forces.

FIG. 1

*FIG. 2*

EP 3 378 682 A1

*FIG. 3*

*FIG. 4*

FIG. 5

FIG. 6

## INTERNATIONAL SEARCH REPORT

| | International application No. |
| --- | --- |
| | PCT/JP2016/077663 |

### A. CLASSIFICATION OF SUBJECT MATTER
*B60G17/015*(2006.01)i

According to International Patent Classification (IPC) or to both national classification and IPC

### B. FIELDS SEARCHED

Minimum documentation searched (classification system followed by classification symbols)
B60G17/015

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 7-315028 A  (Nissan Motor Co., Ltd.),<br>05 December 1995 (05.12.1995),<br>claim 1; paragraphs [0005], [0006], [0008],<br>[0015], [0024], [0037], [0038], [0047], [0048],<br>[0064]; fig. 2, 7, 8<br>(Family: none) | 1-3,5<br>4 |
| Y | JP 2005-81912 A  (Toyota Motor Corp.),<br>31 March 2005 (31.03.2005),<br>paragraphs [0001], [0011]<br>(Family: none) | 4 |

| ☒ | Further documents are listed in the continuation of Box C. | ☐ | See patent family annex. |
| --- | --- | --- | --- |

| | |
| --- | --- |
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 19 October 2016 (19.10.16) | 01 November 2016 (01.11.16) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/077663 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 8-127213 A (Nissan Motor Co., Ltd.), 21 May 1996 (21.05.1996), claim 5 & US 5740039 A claim 17 & DE 19540161 A1 | 4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015226990 A